# EUROPÄISCHE PATENTANMELDUNG

(11) **EP 3 017 910 A2**
(43) Veröffentlichungstag der Anmeldung: **11.05.2016**
(21) Anmeldenummer: 15020190.3
(22) Anmeldetag: 15.10.2015
(51) Int. Cl.: B23Q 7/04, B25J 5/00, B25J 21/00, B23Q 11/08, B23Q 1/48, B23Q 1/54, B23Q 1/66, B23Q 3/06

(54) **DREHTISCH**

(30) Priorität: 30.09.2014 DE 102014114258; 15.10.2014 DE 102014015583; 18.10.2014 DE 102014015346; 03.09.2015 DE 102015011329
(71) Anmelder: SK-Technologies UG, 78733 Aichhalden (DE)
(72) Erfinder: Kruck, Stefan Andreas, 78733 Aichhalden (DE)

(57) **Zusammenfassung**

Die Erfindung betrifft eine Drehtischvorrichtung zum hauptzeitparallelen Arbeiten an mindestens einer von wenigstens zwei vorhandenen Arbeitsstation. Dieser Aufbau ist so ausgeführt und an einem Bearbeitungszentrum angekoppelt, dass während des Arbeitsvorgangs an mindestens einer Arbeitsstation, weitere Arbeitsstationen be- und entladen werden können. Durch erfindungsgemäße Anordnung der Arbeitsstationen bildet die Aufnahmevorrichtung eine Abschirmung der Bearbeitungsvorrichtungen gegen Späne und Zerspanungshilfsstoffe.

## Beschreibung

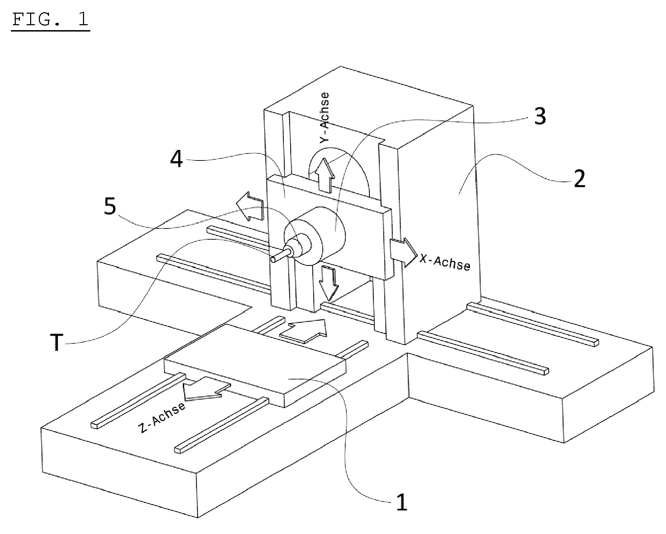

Die vorliegende Erfindung betrifft eine Drehtischvorrichtung gemäß dem Oberbegriff des Patentanspruchs 1. Herkömmlicherweise werden Bearbeitungszentren, wie zum Beispiel das Bearbeitungszentrum, das in der perspektivischen Ansicht von Figur 1 gezeigt ist, zur maschinellen Bearbeitung mechanischer Teile verwendet. Das veranschaulichte Bearbeitungszentrum ist zum Beispiel mit einem Schlitten, der sich horizontal in der Z-Richtung bewegen kann, und einem Ständer, der ein Werkzeug so hält, dass es in einer vertikalen Ebene, die in der X- und der Y-Richtung gebildet wird, bewegt werden kann, ausgestattet. Auf diese Weise werden Freiheitsgrade der maschinellen Bearbeitung in drei Richtungen, die senkrecht zueinander verlaufen, erreicht.

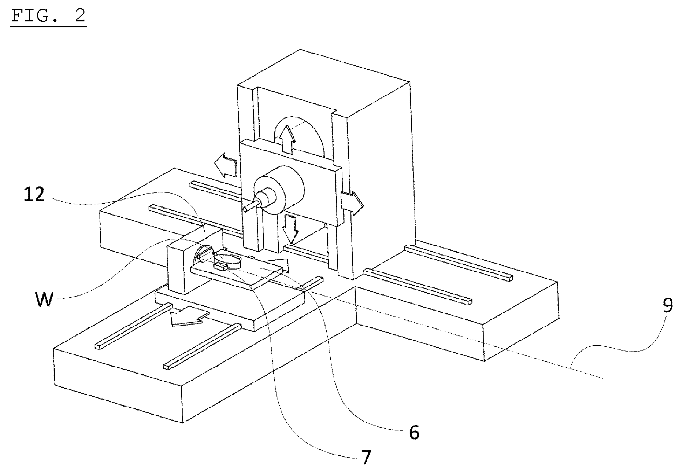

In den vergangenen Jahren wurde auf dem Schlitten zur weiteren Erhöhung des Freiheitsgrades der maschinellen Bearbeitung zusätzlich eine Drehtischvorrichtung angeordnet, die eine Auflagefläche aufweist, die um ein oder zwei Achsen schwenken kann. Ein entsprechender Aufbau ist in Figur 2 gezeigt. Auf diese Weise wird das Bearbeitungszentrum mit 4 bzw. 5 Freiheitsgraden der maschinellen Bearbeitung versehen, wodurch eine kompliziertere Bearbeitung möglich wird.

Bekannte Drehtischvorrichtungen ermöglichen die Aufnahme einer oder mehrerer Bearbeitungsvorrichtungen bzw. der Werkstücke in diesen Bearbeitungsvorrichtungen. Um eine hauptzeitparallele Be- und Entladung der Bearbeitungsvorrichtungen zu ermöglichen, müssten innerhalb des Bearbeitungsraumes des Bearbeitungszentrums weitere Bearbeitungsvorrichtungen be- und entladen werden, während an einer anderen Bearbeitungsvorrichtung bearbeitet wird. Diese Möglichkeit ergibt sich durch neue Konzepte, wie einer hauptzeitparallelen Bearbeitung mittels Roboter bei verbundenem Roboter- und Bearbeitungsraum. Eine manuelle Beladung, während laufender Spindel ist aus Sicherheitsgründen nicht zulässig. Bekannte Drehtischvorrichtungen erschweren dieses hauptzeitparallele Be- und Entladen der Bearbeitungsvorrichtungen, da alle Bearbeitungsvorrichtungen auf einer Raumebene angeordnet sind.

Die vorliegende Erfindung basiert auf den oben angesprochenen Problempunkten. Es ist Aufgabe der Erfindung, die hauptzeitparallele Be- und Entladung auf einem Drehtisch zu ermöglichen.

Dies wird mit den Merkmalen nach Schutzanspruch 1 umfänglich gelöst.

Vorteilhafte Ausgestaltungen und Weiterbildungen der Erfindung sind in den Unteransprüchen angegeben.

Die vorliegende Erfindung ist eine Drehtischvorrichtung, die folgendes aufweist: eine Aufnahmevorrichtung zur drehbaren Lagerung eines Drehtisches und ein Drehtischgestell zur drehbaren Lagerung der als Ausleger geformten Aufnahmevorrichtung. Auf der Aufnahmevorrichtung sind wenigstens zwei Bearbeitungsvorrichtungen angeordnet, wobei deren räumliche Anordnung zueinander derart gestaltet ist, dass durch Rotation um die Drehachse wenigstens zwei Bearbeitungsvorrichtungen abwechselnd in gleiche Raumausrichtung relativ zum Werkzeug gebracht werden können. Die Aufnahmevorrichtung bildet anordnungsbedingt eine Abschirmung der Bearbeitungsvorrichtungen. Genau diese Abschirmungswirkung der Aufnahmevorrichtung ermöglicht das hauptzeitparallele Be- und Entladen, da beispielsweise Bearbeitungsspäne durch entsprechende Bauart der Aufnahmevorrichtung von den anderen Spannstellen abgeschirmt werden können.

Die jeweils nicht in Bearbeitung befindlichen Bearbeitungsvorrichtungen können Be- und Entladen werden, was vorteilhaft von einem Roboter übernommen wird, welcher im Bearbeitungsraum des Bearbeitungszentrums angeordnet ist bzw. dessen Roboterzellenraum mit dem Bearbeitungsraum des Bearbeitungszentrums kombiniert ist.

Gemäß einer bevorzugten Ausgestaltung der Erfindung wird die Drehbewegung der Aufnahmevorrichtung von der Steuerung des Bearbeitungszentrums gesteuert. Somit kann ein gewünschtes Bearbeitungsprogramm ablaufen.

Vorteilhafterweise wird wenigstens ein zusätzlicher Drehtisch verwendet. Dieser Drehtisch wird durch die Maschinensteuerung angesteuert, womit ein Bearbeitungsprogramm ablaufen kann. Somit ist eine sogenannte 5-Achs-Bearbeitung möglich. Dies wird beispielsweise für das Fräsen von sogenannten Impellern oder Turbinenrädern benötigt, da eine 3-achsige Bearbeitung Hinterschneidungen am Werkstück unbearbeitet ließe.

Gemäß einer bevorzugten Ausgestaltung werden die Drehtische so angesteuert, dass diese mittels synchroner und/oder asynchroner Drehgeschwindigkeit arbeiten können. Hiermit wird ermöglicht, dass ein Drehtisch steht, während einer oder mehrere weitere Drehtische drehen. Es kann somit an einem Drehtisch be- und entladen werden, während an den anderen Drehtischen gearbeitet wird.

In einer Weiterbildung der Erfindung sind die wenigstens zwei Bearbeitungsvorrichtungen derart exzentrisch zueinander angeordnet, dass eine Rückseitenbearbeitung mittels wenigstens eines Durchbruchs in der Aufnahmevorrichtung ermöglicht wird. Dies ist dann vorteilhaft, wenn eine Rückseitenbearbeitung nötig ist. Dann wäre es nachteilig, wenn beide Bearbeitungsvorrichtungen konzentrisch zueinander angeordnet wären, was zur Folge hätte, dass die jeweiligen Rückseiten nicht mehr zugänglich wären.

Vorteilhafterweise wird die Aufnahmevorrichtung von einer Gegenlagerung abgestützt. Somit können größere Bearbeitungskräfte aufgenommen werden und es entstehen weniger Vibrationen bei der Bearbeitung.

In einer Weiterbildung der Erfindung ist konzentrisch zur Drehachse vom Drehtischgestell zur Aufnahmevorrichtung hin eine Drehdurchführung für die Verteilung von Medien angeordnet. Mit einer solchen Drehdurchführung können beispielsweise hydraulische oder pneumatische Spannelemente eingesetzt werden, welche über eine zentrale Versorgung, beispielsweise über die Maschine mit Druck beaufschlagt werden.

Gemäß einer bevorzugten Ausbildung der Erfindung ist die Aufnahmevorrichtung in mehreren Ebenen abgesetzt. Somit können die Drehvorrichtungen, welche auf die Aufnahmevorrichtung aufbauen, entsprechend niedriger aufgebaut werden.

Vorteilhafterweise sind Zusatzabschirmungen um die Aufnahmevorichtung herum angeordnet. Mit solchen Zusatzabschirmungen kann jeweils wenigstens eine Bearbeitungsvorrichtung zum Werkzeug hin zugänglich gehalten werden. Wenigstens eine weitere Bearbeitungsvorrichtung kann abgeschirmt werden und in diesem Zustand be- und entladen. Durch Rotation um die erste Drehachse können die Zusatzabschirmungen abwechselnd in gleiche Raumausrichtung gebracht werden.

In einer Weiterbildung der Erfindung ist das Drehtischgestell in das Maschinengestell integriert. Dies wird überwiegend bei entsprechend konstruierten Maschinen angewandt. Bei 3-Achs-Maschinen werden Drehtische oft nachträglich auf den Maschinentisch aufgesetzt.

Die Erfindung wird anhand der nachfolgenden Figuren ausführlich erläutert. Es zeigen:
- Fig. 1: eine perspektivische Darstellung eines Bearbeitungszentrums
- Fig. 2: eine perspektivische Darstellung nach Figur 1 mit zusätzlicher Drehtischvorrichtung
- Fig. 3: eine perspektivische Darstellung einer Drehtischvorrichtung auf einem Maschinentisch mit zwei konzentrisch zueinander stehenden Bearbeitungsvorrichtungen
- Fig. 4: eine perspektivische Darstellung einer Drehtischvorrichtung auf einem Maschinentisch mit nicht konzentrisch zueinander stehenden Bearbeitungsvorrichtungen
- Fig. 5: eine perspektivische Darstellung einer Drehtischvorrichtung auf einem Maschinentisch mit zwei Drehtischen auf einer Aufnahmevorrichtung
- Fig. 6: eine perspektivische Darstellung einer Drehtischvorrichtung auf einem Maschinentisch mit Zusatzabschirmungen
- Fig. 7: eine perspektivische Darstellung einer Drehtischvorrichtung auf einem Maschinentisch mit aufgesetzten Drehachsen, welche mittels abgesetzter Aufnahmevorrichtung zur Drehachse 1 hin verschoben sind

In der perspektivischen Darstellung nach Figur 1 ist der Aufbau eines Bearbeitungszentrums dargestellt. Diese Darstellung dient zum besseren Verständnis und zeigt noch keine erfindungsgemäße Ausgestaltung.

In der perspektivischen Darstellung nach Figur 2 ist der Aufbau eines Bearbeitungszentrums dargestellt. Hier ist nun zusätzlich eine Drehtischvorrichtung nach dem Stand der Technik aufgebaut. Diese Darstellung dient zum besseren Verständnis und zeigt noch keine erfindungsgemäße Ausgestaltung.

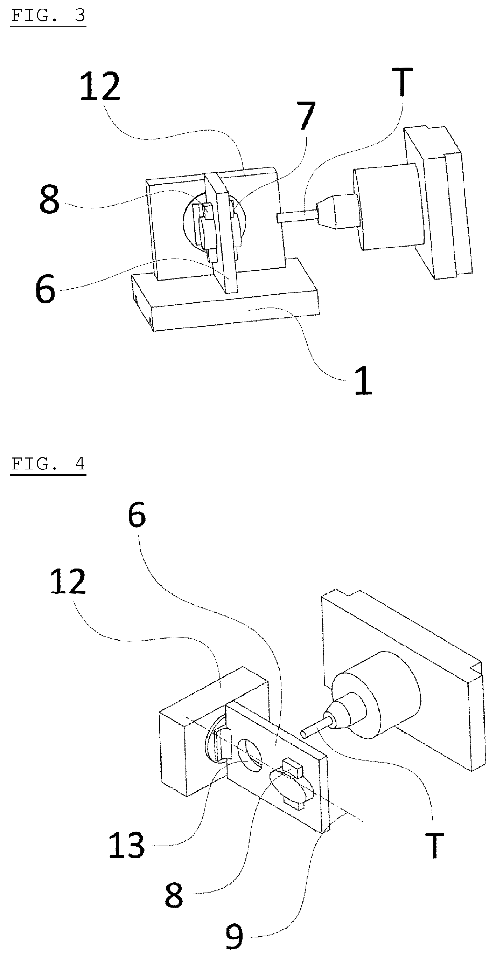

Mit der Figur 3 ist eine Ausführung dargestellt, bei der die Bearbeitungsvorrichtungen (7+8) konzentrisch zueinander angeordnet sind. Dies hat zum Vorteil, dass bei einer entsprechenden Drehung um die Drehachse 1 (9), hier 180°, die Bearbeitungsvorrichtung 2 (8) in gleiche räumliche Ebenenlage gebracht werden kann, in der vor der Drehung die Bearbeitungsvorrichtung 1 (7) stand. Durch die konzentrische Anordnung der Bearbeitungsvorrichtungen ergibt sich zur gleichen Raumebenenausrichtung nach der Drehung um die Drehachse 1 (9) sogar die gleiche Positionslage relativ zum Bearbeitungswerkzeug (T).

Mit Ausführungsform, wie in Figur 4 dargestellt, wird der Nachteil der Ausführungsform 1 umgangen. Die nicht konzentrische Anordnung der Bearbeitungsvorrichtungen (7+8) ermöglicht einen Durchbruch (13) in der Aufnahmevorrichtung (6). Durch diesen Durchbruch (13) hindurch kann eine rückseitige Bearbeitung am Werkstück (W) vorgenommen werden.

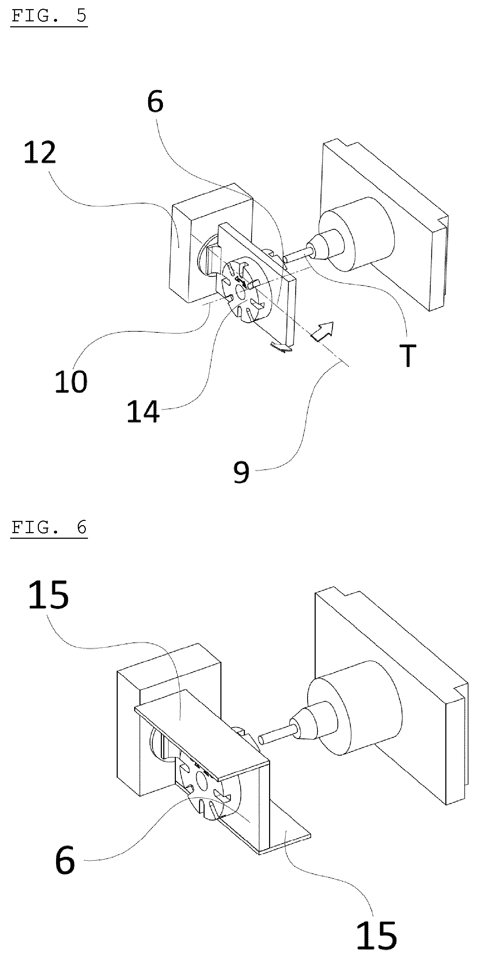

In der perspektivischen Darstellung nach Figur 5 werden weitere Drehachsen auf der Aufnahmevorrichtung (6) angeordnet gezeigt. Hiermit ergeben sich 5 Freiheitsgrade, was eine komplizierte Bearbeitung erlaubt.

Die perspektivische Darstellung nach Figur 6 zeigt einen Aufbau gemäß Figur 5 mit Zusatzabschirmungen (15). Es sind zwei Zusatzabschirmungen (15) um die Aufnahmevorrichtung (6) herum derart angeordnet, dass diese die jeweils wenigstens eine in Bearbeitung befindliche Bearbeitungsvorrichtung (7,8) zum Werkzeug (T) hin zugänglich lässt und die wenigstens eine zu be- und entladende Bearbeitungsvorrichtung (7,8) abschirmt, wobei durch Rotation um die Drehachse 1 (9) die Zusatzabschirmungen (15) abwechselnd in gleiche Raumebenenausrichtung gebracht werden können, wobei die jeweils abschirmende Zusatzabschirmung (15) vorzugsweise derart aktiv ist, dass diese in Schwerkraftrichtung über der jeweiligen Bearbeitungsvorrichtung (7,8) steht. Die Zusatzabschrimungen (15) decken somit die nicht in Bearbeitung befindlichen Bearbeitungsvorrichtungen (7,8) ab, damit keine Bearbeitungsspäne oder sonstigen Verschmutzungen an die Spannstellen gelangen können. Hiermit wird eine prozesssichere hauptzeitparallele Beladung gewährleistet. Ohne diese Vorkehrung könnte die Gefahr bestehen, dass die Spannstellen durch die zerspanende Bearbeitung zwischen des Entladevorgangs und des neuen Beladens verschmutzt werden würden.

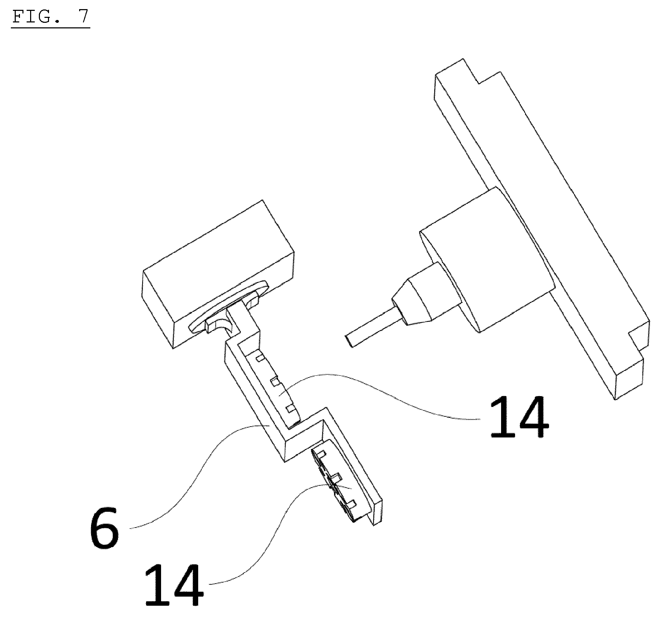

In der perspektivischen Darstellung nach Figur 7 ist eine Aufnahmevorrichtung (6) gezeigt, die eine durch mehrere Ebenen abgesetzte Form aufweist, wobei zwei gegenüberliegende Ebenen derart zueinander parallel verschoben sind, dass die Bearbeitungsvorrichtungen (7+8) näher zur Drehachse 1 (9) aufgebaut sind. Hiermit kann Bauraumeingespart werden, da der umschriebene Hüll-Drehkreis der gesamten auf der Aufnahmevorrichtung (6) aufgebauten Elemente hierdurch verkleinert wird.

### Bezugszeichenliste:

- 1: Maschinentisch
- 2: Fahrständer
- 3: Bearbeitungsspindel
- 4: Spindelführung
- 5: Werkzeugaufnahme
- 6: Aufnahmevorrichtung
- 7: Bearbeitungsvorrichtung 1
- 8: Bearbeitungsvorrichtung 2
- 9: Drehachse 1
- 10: Drehachse 2
- 11: Gegenlagerung
- 12: Drehtischgestell
- 13: Durchbruch
- 14: Drehtisch
- 15: Zusatzabschirmung

- T: Werkzeug

- W: Werkstück

## Patentansprüche

1. Drehtischvorrichtung, aufweisend eine Aufnahmevorrichtung (6) zur Lagerung von Bearbeitungsvorrichtungen und ein Drehtischgestell (12) zur um die Drehachse 1 (9) drehbaren Lagerung der als Ausleger geformten Aufnahmevorrichtung (6),
**dadurch gekennzeichnet, dass** auf der Aufnahmevorrichtung (6) wenigstens zwei Bearbeitungsvorrichtungen (7+8) angeordnet sind, wobei deren räumliche Anordnung zueinander derart gestaltet ist, dass durch Rotation um die Drehachse 1 (9) wenigstens zwei Bearbeitungsvorrichtungen (7+8) abwechselnd in gleiche Raumebenenausrichtung - relativ zum Werkzeug (T) - bringbar sind, wobei die Aufnahmevorrichtung (6) eine Abschirmung der Bearbeitungsvorrichtungen gegen Verschmutzung zur hauptzeitparallelen Be- und Entladung bildet.

2. Drehtischvorrichtung nach Anspruch 1,
**dadurch gekennzeichnet, dass** die Drehbewegung der Aufnahmevorrichtung (6) von der Steuerung des Bearbeitungszentrums derart gesteuert wird, dass ein gewünschtes Bearbeitungsprogramm abläuft.

3. Drehtischvorrichtung nach einem der vorhergehenden Ansprüche, **dadurch gekennzeichnet, dass** die Bearbeitungsvorrichtungen auf jeweils einem Drehtisch (14) angeordnet sind, wobei hiermit wenigstens eine zusätzliche Drehachse 2 (10) entsteht, wobei der Drehtisch (14) durch die Steuerung des Bearbeitungszentrums angesteuert wird.

4. Drehtischvorrichtung nach Anspruch 3,
**dadurch gekennzeichnet, dass** die Drehtische (14) mittels Ansteuerung mit synchroner und/oder asynchroner Drehgeschwindigkeiten rotieren.

5. Drehtischvorrichtung nach Anspruch 1,
**dadurch gekennzeichnet, dass** die wenigstens zwei Bearbeitungsvorrichtungen (7+8) innerhalb der Raumebene der Aufnahmevorrichtung (6) derart exzentrisch zueinander angeordnet sind, dass wenigstens ein Durchbruch (13) anordnenbar ist.

6. Drehtischvorrichtung nach einem der vorhergehenden Ansprüche, **dadurch gekennzeichnet, dass** die Aufnahmevorrichtung (6) mit einer Gegenlagerung (11) abgestützt wird.

7. Drehtischvorrichtung nach einem der vorhergehenden Ansprüche, **dadurch gekennzeichnet, dass** konzentrisch zur Drehachse 1 (9) vom Drehtischgestell (12) zur Aufnahmevorrichtung (6) eine Drehdurchführung für die Verteilung von Medien zum Betätigen der Bearbeitungsvorrichtungen führt.

8. Drehtischvorrichtung nach einem der vorhergehenden Ansprüche, **dadurch gekennzeichnet, dass** die Aufnahmevorrichtung (6) eine durch mehrere Ebenen abgesetzte Form aufweist, wobei wenigstens zwei gegenüberliegende Ebenen derart zueinander parallel verschoben sind, dass die Bearbeitungsvorrichtungen (7+8) näher zur Drehachse 1 (9) aufgebaut sind.

9. Drehtischvorrichtung nach einem der vorhergehenden Ansprüche, **dadurch gekennzeichnet, dass** wenigstens zwei Zusatzabschirmungen (15) um die Aufnahmevorrichtung (6) herum derart angeordnet sind, dass diese die jeweils wenigstens eine in Bearbeitung befindliche Bearbeitungsvorrichtung zum Werkzeug (T) hin zugänglich lässt und die wenigstens eine zu be- und entladende Bearbeitungsvorrichtung abschirmt, wobei durch Rotation um die Drehachse 1 (9) die Zusatzabschirmungen (15) abwechselnd in gleiche Raumebenenausrichtung bringbar sind.

10. Drehtischvorrichtung nach einem der vorhergehenden Ansprüche, **dadurch gekennzeichnet**, das Drehtischgestell (12) in das Maschinengestell integriert ist.
